# EUROPEAN PATENT APPLICATION

(11) **EP 4 803 221 A1**
(43) Date of publication of application: **09.09.2026**
(21) Application number: 24886318.5
(22) Date of filing: 31.10.2024
(51) Int. Cl.: B21B 37/30, B21B 37/40, B21B 31/20, B21B 31/24, B21B 15/00

(54) **RESTRAINT ROLL APPARATUS AND SHEARING APPARATUS FOR STEEL PLATE**

(30) Priority: 01.11.2023 KR 20230148922
(71) Applicant: POSCO Co., Ltd, Pohang-si, Gyeongsangbuk-do 37859 (KR)
(72) Inventor: RYOO, Sung-Ryong, Pohang-si, Gyeongsangbuk-do 37877 (KR); PARK, Nam-Su, Gwangyang-si, Jeollanam-do 57807 (KR); KIM, Ji-Su, Gwangyang-si, Jeollanam-do 57807 (KR); NA, Tae-Gyoung, Gwangyang-si, Jeollanam-do 57807 (KR)
(74) Representative: Meissner Bolte Partnerschaft mbB
(86) International application number: PCT/KR2024/016959
(87) International publication number: WO 2025/095646

(57) **Abstract**

The present invention provides a restraint roll apparatus comprising: a pair of restraint roll units for pressing and restraining the upper side and the lower side of a steel plate and transferring the steel plate in a restrained state while rotating same; a pressing unit that is installed to connect the pair of restraint roll units and applies a pressing force so that the pair of restraint roll units press the steel plate; and an adjustment unit for adjusting the alignment of the restraint roll units by rotating the restraint roll units with respect to a rotation center unit.

## Description

### Technical Field

The present disclosure relates to a restraint roll apparatus and an apparatus for shearing a steel plate.

### Background Art

It is to be noted that contents described in this section simply provide background information on the present disclosure and do not constitute prior art.

A process of cutting a thick steel plate, particularly, a width cutting process, may be a process of cutting unnecessary portions on both sides of a rolled slab to a size required by a customer.

When a cutting unit cuts a width direction end region of a thick steel plate, a restraint roll apparatus may transport and stop the thick steel plate using rotational force while restraining upper and lower surfaces of the thick steel plate by force.

However, when an alignment direction or the like of the restraint roll apparatus is changed due to unexpected external force, impacts, or the like, straightness of the thick steel plate may not be secured, and a cutting line on a side surface of the thick steel plate may deviate from a straight line, and in severe cases, there may be a problem that this leads to defects.

In the past, when realignment of restraint rolls was required, tension of a spring supporting the restraint rolls had to be released. However, tension of a spring supporting the restraint rolls weighing several tons was removed manually using a hydraulic jack or by two workers employing a long lever.

Accordingly, since alignment of the restraint rolls is realigned by worker's manpower, precision of the alignment may be reduced, work efficiency such as realignment or the like may be reduced, and possibility of safety accidents such as falling, entrapment, or the like of workers may increase.

In addition, since it takes about 30 minutes per restraint roll to complete realignment and adjustment of restraint rolls, there may be a problem that productivity is reduced as excessive work time may be spent on equipment maintenance.

(Patent Document 1) KR 10-1720089 B1

### Summary of Invention

### Technical Problem

The present disclosure, as an aspect, provides a restraint roll apparatus and an apparatus for shearing a steel plate, capable of improving precision of an alignment state by aligning a restraint roll unit using power of a mechanical device, not manpower of a worker or the like.

The present disclosure, as an aspect, provides a restraint roll apparatus and an apparatus for shearing a steel plate, capable of improving workability of a worker and shortening a work time by adjusting an alignment state of a restraint roll unit, not manpower of a worker or the like, thereby improving productivity and preventing occurrence of safety accidents of the worker in advance.

### Solution to Problem

In order to achieve the above-mentioned purposes, the present disclosure provides a restraint roll apparatus including a pair of restraint roll units pressurizing and restraining upper and lower sides of a steel plate and transporting the steel plate in a restrained state while rotating the pair of restraint roll units; a pressurizing unit installed to connect between the pair of restraint roll units and applying a pressurizing force to pressurize the steel plate with the pair of restraint roll units; and an adjustment unit rotating a restraint roll unit, based on a rotation center unit, to adjust an alignment state of the restraint roll unit.

A restraint roll apparatus of the present disclosure may have an effect of improving precision of alignment by aligning a restraint roll unit using power of a mechanical device, not manpower of a worker or the like.

The restraint roll unit may include a restraint roll pressurizing and transporting the steel plate while rotating the restraint roll; a driving member connected to the restraint roll via a drive shaft and rotating the restraint roll; and a housing connected to the rotation center unit and rotating based on the rotation center unit by the adjustment unit.

The adjustment unit may include an adjustment frame installed around the housing; a fixing member installed on the adjustment frame, and fixing the housing while closely contacting the adjustment frame via tension of a spring, in a state in which one side is fixed to the housing; and a rotating member moving a wedge member between the housing and the adjustment frame in a forward direction or a backward direction, to rotate the housing based on the rotation center unit.

The fixing member may include a first fixing member installed on the adjustment frame, and fixing the housing by pressurizing in a first direction; and a second fixing member installed on the adjustment frame, and fixing the housing by pressurizing in a second direction, intersecting the first direction.

The fixing member may include a fixing bolt installed through the adjustment frame and of which one side is fixed to the housing; a pressurizing module installed on the other side of the fixing bolt, and applying tensile force to the fixing bolt while closely contacting the adjustment frame via tension of the spring; and a tension adjusting module having a tension cylinder accommodating the pressurizing module, and adjusting tension of the spring via pressure provided between the pressurizing module and the tension cylinder.

The pressurizing module may include a cylinder shaft through which the fixing bolt is installed and of which one side is disposed to contact the adjustment frame; and the spring installed between the tension cylinder and the cylinder shaft to provide tension, to closely contact the cylinder shaft and the adjustment frame.

The tension adjusting module may include the tension cylinder accommodating the cylinder shaft and forming a pressurization space to which pressure is supplied, together with the cylinder shaft; and a pressure adjusting member injecting or discharging pressure into the pressurization space between the cylinder shaft and the tension cylinder to adjust tension of the spring.

The fixing member may include a fixing bolt installed through the adjustment frame and having one side of which is fixed to the housing; a cylinder shaft through which the fixing bolt is installed and of which one side is disposed to contact the adjustment frame; a tension cylinder accommodating the cylinder shaft and forming a pressurization space to which pressure is supplied, together with the cylinder shaft; the spring disposed on an opposite side of the adjustment frame with the cylinder shaft interposed therebetween, and installed between the tension cylinder and the cylinder shaft to provide tension, to closely contact the adjustment frame; and a pressure adjusting member injecting or discharging hydraulic pressure or pneumatic pressure into the pressurization space between the cylinder shaft and the tension cylinder to adjust tension of the spring, while moving the tension cylinder relative to the cylinder shaft.

The rotating member may include a wedge member installed to move between the housing and the adjustment frame in a forward direction or a backward direction, and of which thickness is changed in the direction of moving forward and backward; and a servo motor moving the wedge member in a forward direction or a backward direction to adjust a distance between the housing and the adjustment frame.

A fixing bolt of the fixing member may be installed to penetrate through a wedge hole of the wedge member, and a first diameter of the wedge hole may be configured to be larger than a second diameter of the fixing bolt, to move the wedge member in a direction, intersecting a length direction of the fixing bolt, in a state in which the fixing bolt penetrates the wedge member.

As another aspect for achieving the purposes, the present disclosure provides an apparatus for shearing a steel plate including a roll table transporting the steel plate; a cutting unit for continuously cutting a width direction end region of the steel plate transported on the roll table; and the restraint roll apparatus disposed around the cutting unit in a transport direction of the steel plate, and transporting the steel plate in a pressurized state.

The restraint roll apparatus may include a first restraint roll apparatus disposed on an upstream side of the steel plate being transported; and a second restraint roll apparatus disposed on a downstream side of the steel plate being transported, and installed with the cutting unit interposed therebetween in the transport direction of the steel plate.

### Advantageous Effects of Invention

According to an aspect of the present disclosure, alignment of a restraint roll unit may be improved by aligning a restraint roll unit using power of a mechanical device, not manpower of a worker or the like, thereby improving precision of an alignment state.

In an aspect, the present disclosure may have an effect of improving workability of a worker and shortening a work time by adjusting an alignment state of a restraint roll unit, not manpower of a worker or the like, thereby improving productivity and preventing occurrence of safety accidents of the worker in advance.

### Brief Description of Drawings

FIG. 1 is a perspective view of a restraint roll apparatus according to an embodiment of the present disclosure.
FIG. 2 is a front view of a restraint roll apparatus according to an embodiment of the present disclosure.
FIG. 3 is a plan view of a restraint roll apparatus according to an embodiment of the present disclosure.
FIG. 4 is a view illustrating a process of adjusting an alignment state of a restraint roll unit by moving a wedge member of an adjustment unit in a backward direction in the restraint roll apparatus of FIG. 3 to rotate the restraint roll apparatus counterclockwise.
FIG. 5 is a view illustrating a process of adjusting an alignment state of a restraint roll unit by moving a wedge member of an adjustment unit in a forward direction in the restraint roll apparatus of FIG. 3 to rotate the restraint roll apparatus counterclockwise.
FIG. 6 is a cross-sectional view of portion 'A' of FIG. 3.
FIG. 7 is a cross-sectional view of portion 'B' of FIG. 4.
FIG. 8 is a cross-sectional view of portion 'C' of FIG. 5.
FIG. 9 is a plan view of an apparatus for shearing a steel plate according to an embodiment of the present disclosure.
FIG. 10 is a view illustrating a misaligned state of a restraint roll unit included in the apparatus of FIG. 9.

### Best Mode for Invention

Hereinafter, preferred embodiments of the present disclosure will be described with reference to the attached drawings. However, embodiments of the present disclosure may be changed in various other forms, and the scope of the present disclosure is not limited to embodiments described below. In addition, embodiments of the present disclosure may be provided to more completely explain the present disclosure to a person having average knowledge in the relevant technical field. Shapes and sizes of elements in the drawings may be exaggerated for clarity.

Referring to the drawings, a restraint roll apparatus and an apparatus for shearing a steel plate, according to the present disclosure, are illustrated in a transport direction (front-backward direction), a width direction (left-right direction), and an up-down direction, and although the terms of the transport direction, the width direction, and the up-down direction are used in the detailed description of the present disclosure, this may be for the convenience of explanation, and it may be to be noted that technical features of a restraint roll apparatus and an apparatus for shearing a steel plate, according to the present disclosure, are not limited to these directions.

Hereinafter, an X-axis illustrated in the attached drawings may be the transport direction (front-backward direction) of the restraint roll apparatus and the apparatus for shearing a steel plate, a Y-axis may be the width direction (left-right direction) of the restraint roll apparatus and the apparatus for shearing a steel plate, and a Z-axis may be the up-down direction of the restraint roll apparatus and the apparatus for shearing a steel plate.

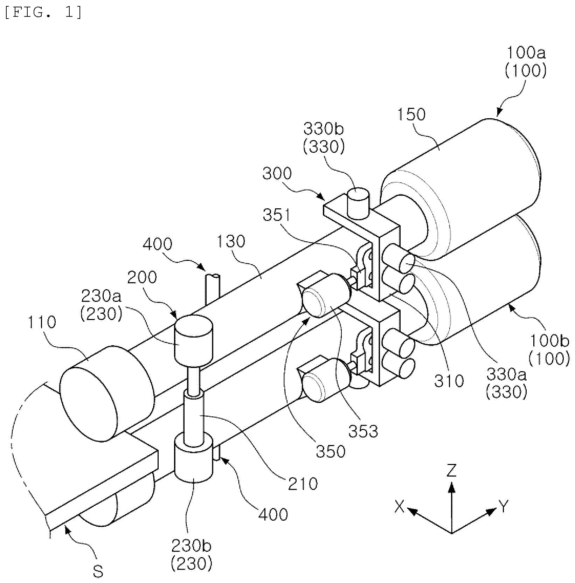

Hereinafter, with reference to FIGS. 1 to 10, components included in a restraint roll apparatus 30 according to an embodiment of the present disclosure will be specifically described.

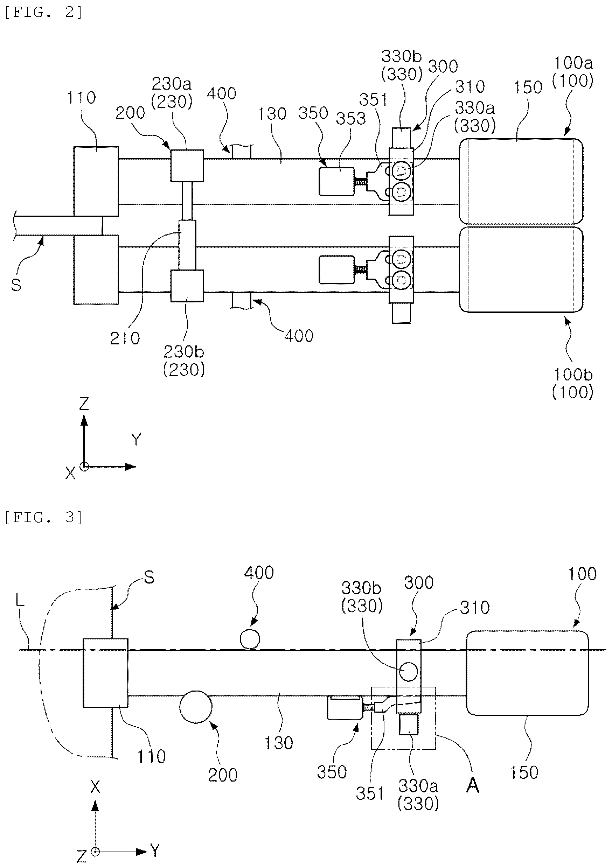

FIG. 1 is a perspective view of a restraint roll apparatus 30 according to an embodiment of the present disclosure. FIG. 2 is a front view of a restraint roll apparatus 30 according to an embodiment of the present disclosure. FIG. 3 is a plan view of a restraint roll apparatus 30 according to an embodiment of the present disclosure.

A restraint roll apparatus 30 according to an embodiment of the present disclosure may include a pair of restraint roll units 100, a pressurizing unit 200, and an adjustment unit 300.

The pair of restraint roll units 100 may pressurize and restrain upper and lower sides of a steel plate S, and may transport the steel plate S in a restrained state while rotating the pair of restraint roll units 100.

For example, the pair of restraint roll units 100 may be composed of a first restraint roll unit 100a and a second restraint roll unit 100b, and the first and second restraint roll units 100 may be disposed spaced apart in the vertical direction (Z) with the steel plate S interposed therebetween.

The first restraint roll unit 100a may pressurize and restrain the upper side of the steel plate S, and may transport the steel plate S in a restrained state while rotating the first restraint roll unit 100a. The second restraint roll unit 100b may pressurize and restrain the lower side of the steel plate S, and may transport the steel plate S in a restrained state while rotating the second restraint roll unit 100b.

The pressurizing unit 200 may be installed to connect between the pair of restraint roll units 100, and may apply a pressurizing force to pressurize the steel plate S by the pair of restraint roll units 100.

The pressurizing unit 200 may be composed of a pressurizing cylinder 210 connecting between the pair of restraint roll units 100, and the pressurizing cylinder 210 may be fixed to a cylinder bracket 230.

One side of the pressurizing cylinder 210 may be fixed to a first cylinder bracket 230a installed in a housing 130 of the first restraint roll unit 100a, and the other side of the pressurizing cylinder 210 may be fixed to a second cylinder bracket 230b installed in a housing 130 of the second restraint roll unit 100b.

The adjustment unit 300 may rotate a restraint roll unit 100, based on a rotation center unit 400, to adjust an alignment state of the restraint roll unit 100. For example, the adjustment unit 300 may adjust the alignment state of the restraint roll unit 100 using power of a mechanical device such as a hydraulic motor 335a or a servo motor 353, or the like, not a manual work of a worker, thereby having an effect of more precisely adjusting the alignment state of the restraint roll unit 100.

The rotation center unit 400 may be installed in each of the restraint roll units 100. The rotation center unit 400 may serve as a rotation axis of the restraint roll unit 100 in a state fixed to a fixing structure therearound.

The restraint roll unit 100 may include a restraint roll 110, a driving member 150, and a housing 130.

The restraint roll 110 may pressurize the steel plate S, and may transport the steel plate S while rotating the restraint roll 110.

The driving member 150 may be connected to the restraint roll 110 via a driving shaft, and may rotate and drive the restraint roll 110. The driving shaft may rotate by the driving member 150 in a state accommodated in the housing 130.

The housing 130 may be connected to the rotation center unit 400, and may rotate based on the rotation center unit 400 by the adjustment unit 300. The driving shaft may be disposed in the housing 130, and the adjustment unit 300 may be disposed outside the housing 130.

The adjustment unit 300 may have an adjustment frame 310, a fixing member 330, and a rotating member 350.

The adjustment frame 310 may be installed around the housing 130. The adjustment frame 310 may be fixed to the fixing structure therearound, and may form an installation portion of the fixing member 330 and an installation portion of the rotating member 350.

The fixing member 330 may be installed in the adjustment frame 310, and may fix the housing 130 while closely contacting the adjustment frame 310 by tension of a spring 334 in a state in which one side thereof is fixed to the housing 130.

The fixing member 330 may include a first fixing member 330a and a second fixing member 330b.

The first fixing member 330a may be installed in the adjustment frame 310, and may pressurize and fix the housing 130 in a first direction. The first fixing member 330a may pressurize and fix the housing 130 in a direction corresponding to the first direction, which may be a transport direction (X, forward/backward direction).

The second fixing member 330b may be installed in the adjustment frame 310, and may pressurize and fix the housing 130 in a second direction, intersecting the first direction. The second fixing member 330b may pressurize and fix the housing 130 in a direction corresponding to the second direction, which may be an up-down direction (Z).

The rotating member 350 may move a wedge member 351 between the housing 130 and the adjustment frame 310 in a forward direction or a backward direction, in a state in which tension of a spring 334 of the first fixing member 330a and tension of a spring 334 the second fixing member 330b are released, to rotate the housing 130 based on the rotation center unit 400. In this case, an alignment state of the restraint roll unit 100 may be adjusted while rotating the housing 130 based on the rotation center unit 400.

The first fixing member 330a and the second fixing member 330b may be installed together in one adjustment frame 310.

The rotating member 350 may move the wedge member 351 between the housing 130 and the adjustment frame 310 in a forward direction or a backward direction, to rotate the housing 130 based on the rotation center unit 400.

For example, the rotating member 350 may move the wedge member 351 between the housing 130 and the adjustment frame 310 in a forward direction or a backward direction, in a state in which tension of the spring 334 of the fixing member 330 is adjusted. Therefore, the wedge member 351 of the rotating member 350 may be more easily fitted between the housing 130 and the adjustment frame 310.

The rotating member 350 may include a wedge member 351 and a servo motor 353.

The wedge member 351 may be installed to move between the housing 130 and the adjustment frame 310 in a forward direction or a backward direction, and a thickness of the wedge member 351 may be changed in a movement direction. For example, the wedge member 351 may move in a left or right direction, which may be the width direction (Y), in a forward direction or a backward direction.

A distance between the housing 130 and the adjustment frame 310 may be adjusted according to the thickness of the wedge member 351 disposed between the housing 130 and the adjustment frame 310.

For example, when the wedge member 351 is inserted between the housing 130 and the adjustment frame 310, the housing 130 may rotate based on the rotation center unit 400 as the thickness of the wedge member 351 disposed between the housing 130 and the adjustment frame 310 is changed. In this case, an alignment state of the restraint roll unit 100 may be adjusted while the driving member 150, the driving shaft, and the restraint roll 110, connected to the housing 130, integratedly rotate. After the alignment state of the restraint roll unit 100 is adjusted to a correct position, the wedge member 351 may be maintained such that the alignment state of the restraint roll unit 100 is not changed, while fixing a position thereof.

The servo motor 353 may move the wedge member 351 in a forward direction or a backward direction, to adjust the distance between the housing 130 and the adjustment frame 310. When power and a signal are applied to the servo motor 353, the wedge member 351 may move in a forward direction or a backward direction (forward or backward), and may play a role in moving the wedge member 351 in a forward direction and a backward direction within a specified precision error range.

A specification that may exert sufficient force to move the wedge member 351 in a forward direction or a backward direction, may be applied to the servo motor 353, in a state in which the tension of the spring 334 of the fixing member 330 is released.

A fixing bolt 331 of the fixing member 330 may be installed through a wedge hole 352 of the wedge member 351. A first diameter of the wedge hole 352 may be configured to be larger than a second diameter of the fixing bolt 331, to move the wedge member 351 in a direction, intersecting a length direction of the fixing bolt 331, in a state in which the fixing bolt 331 penetrates the wedge member 351.

For example, the wedge member 351 may move in a direction, intersecting and perpendicular to the length direction of the fixing bolt 331. Specifically, the fixing bolt 331 may be formed to extend in the length direction, which may be a transport direction (X), and the wedge member 351 may be moved in a width direction (Y), intersecting and perpendicular to the transport direction (X).

For example, the first diameter of the wedge hole 352 may have a range of 1.5 to 3 times the second diameter of the fixing bolt 331.

Hereinafter, with reference to FIGS. 3 to 5, a process of adjusting an alignment state of a restraint roll unit 100 will be briefly described as follows.

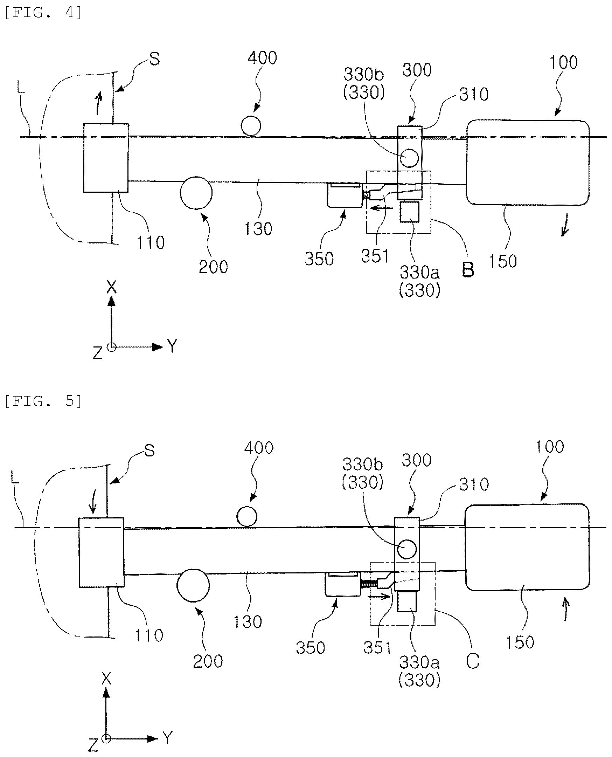

FIG. 3 is a plan view of a restraint roll apparatus 30 according to an embodiment of the present disclosure. FIG. 4 is a view illustrating a process of adjusting an alignment state of a restraint roll unit 100 by moving a wedge member 351 of an adjustment unit 300 in a backward direction in the restraint roll apparatus 30 of FIG. 3 to rotate the restraint roll apparatus 30 clockwise. FIG. 5 is a view illustrating a process of adjusting an alignment state of a restraint roll unit 100 by moving a wedge member 351 of an adjustment unit 300 in a forward direction in the restraint roll apparatus 30 of FIG. 3 to rotate the restraint roll apparatus 30 counterclockwise.

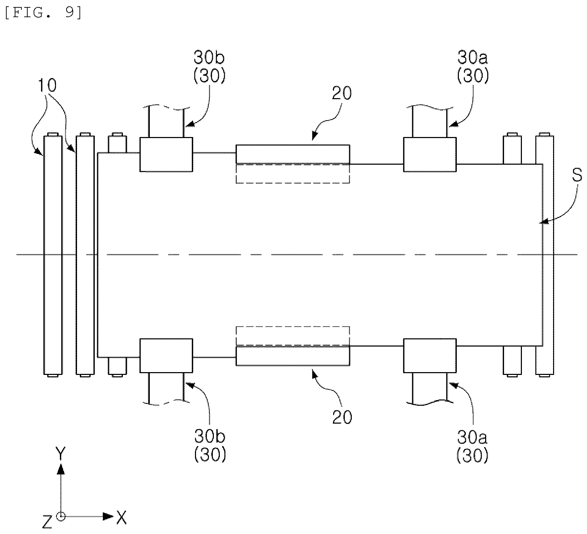

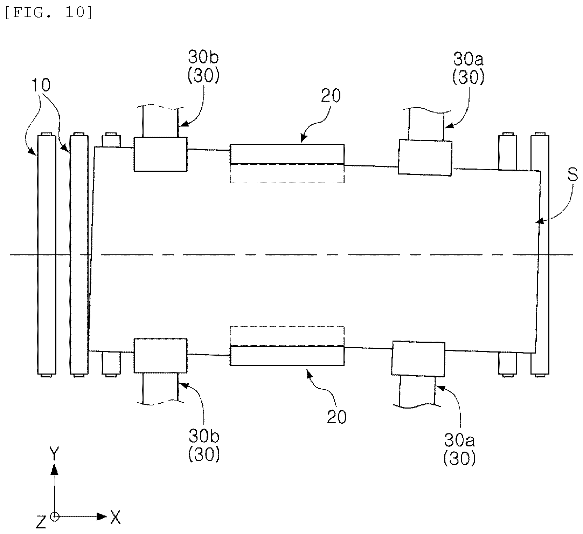

When misalignment or the like occurs in a restraint roll 110 of a restraint roll apparatus 30 and an alignment state of a restraint roll unit 100 needs to be adjusted (see FIG. 10), the alignment state of the restraint roll unit 100 may be adjusted in a correct position through the following process, as illustrated in FIG. 9. (See FIG. 9)

First, tension of a spring 334 applied to a fixing member 330 may be released.

Next, a rotating member 350 may move a wedge member 351 between a housing 130 and an adjustment frame 310 in a forward direction or a backward direction, to rotate the housing 130 based on a rotation center unit 400. In this case, considering misalignment or the like of a restraint roll 110, the servo motor 353 may determine a degree of moving the wedge member 351 in a forward direction or a backward direction.

Specifically, referring to FIG. 3, the housing 130 may be disposed parallel to a horizontal line L in a left-right direction. Thereafter, in a state in which a fixed state of the fixing member 330 is released, the wedge member 351 may be advanced and retracted in the left-right direction by a configuration of a servo motor 353. The wedge member 351 may have a shape in which a thickness increases from one side in the width direction (Y) to the other side in the width direction (Y).

Referring to FIG. 4, when the servo motor 353 moves the wedge member 351 to the left, a thin portion of the wedge member 351 may be disposed between the housing 130 and the adjustment frame 310, and the housing 130 may rotate clockwise based on the rotation center unit 400. For example, the restraint roll 110 may rotate in an upward direction, and a driving member 150 may rotate in a downward direction.

Referring to FIG. 5, when the servo motor 353 moves the wedge member 351 to the right, a thick portion of the wedge member 351 may be disposed between the housing 130 and the adjustment frame 310, and the housing 130 may rotate counterclockwise based on the rotation center unit 400. For example, the restraint roll 110 may rotate in a downward direction, and the driving member 150 may rotate in an upward direction.

Next, tension of the spring 334 may be applied to the fixing member 330, to fix the fixing member 330 to the housing 130, thereby supporting a restraint roll apparatus 30 of which alignment is complete.

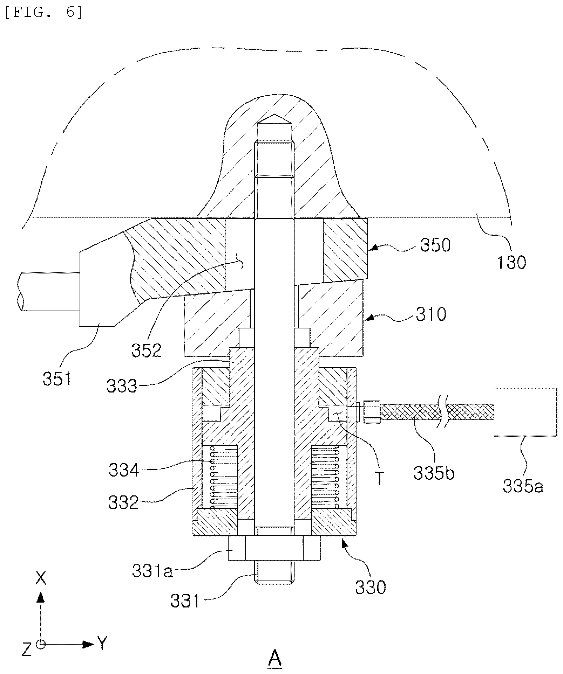

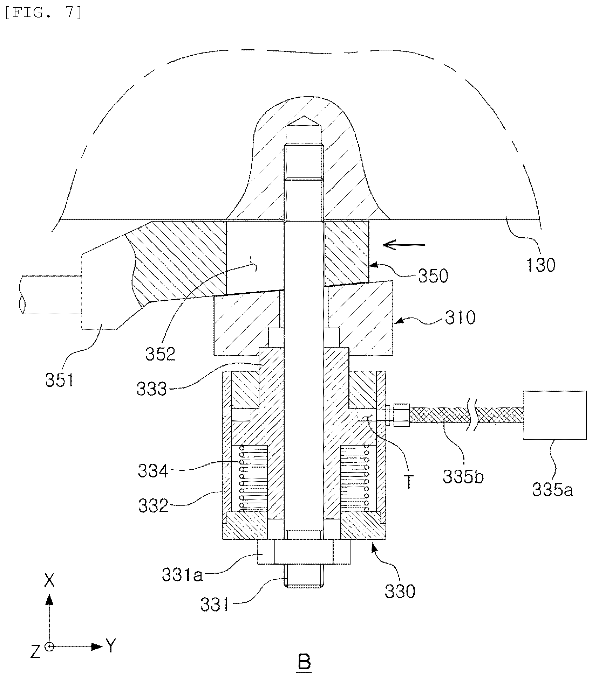

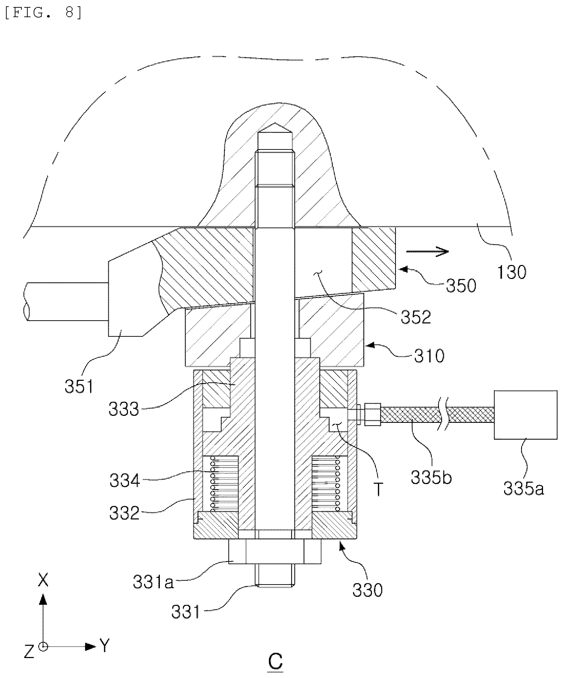

FIG. 6 is a cross-sectional view of portion 'A' of FIG. 3. FIG. 7 is a cross-sectional view of portion 'B' of FIG. 4. FIG. 8 is a cross-sectional view of portion 'C' of FIG. 5.

The fixing member 330 may include a fixing bolt 331, a pressurizing module, and a tension adjusting module.

The fixing bolt 331 may be installed through the adjustment frame 310, and one side of the fixing bolt 331 may be fixed to the housing 130.

The pressurizing module may be installed on the other side of the fixing bolt 331, and may apply tensile force to the fixing bolt 331 while closely contacting the adjustment frame 310 via tension of the spring 334.

The tension adjusting module may have a tension cylinder 332 accommodating the pressurizing module, and may adjust tension of the spring 334 via pressure provided between the pressurizing module and the tension cylinder 332.

The tension adjusting module may be disposed on an opposite side of the housing 130 with the adjustment frame 310 therebetween.

The pressurizing module may include a cylinder shaft 333 and a spring 334.

The cylinder shaft 333 may be through which the fixing bolt 331 is installed and of which one side is disposed to contact the adjustment frame 310. The cylinder shaft 333 may apply tensile force to the fixing bolt 331 while closely contacting the adjustment frame 310 via tension of the spring 334.

The cylinder shaft 333 may be installed through which the fixing bolt 331 penetrates and to be slidably installed on the fixing bolt 331. One side of the cylinder shaft 333 may be disposed to contact the adjustment frame 310, and the other side of the cylinder shaft 333 may be disposed to contact the spring 334.

The cylinder shaft 333 may be supported by tension of the spring 334, and may be spaced apart from a nut 331a of the fixing bolt 331. When the spring 334 is compressed, the cylinder shaft 333 may move toward the nut 331a of the fixing bolt 331, and a distance between the cylinder shaft 333 and the nut 331a of the fixing bolt 331 may be reduced.

At least a portion of the cylinder shaft 333 may be disposed in the tension cylinder 332 together with the spring 334, and a remaining portion of the cylinder shaft 333 may be disposed to protrude from the tension cylinder 332 and contact the adjustment frame 310.

The spring 334 may be installed between the tension cylinder 332 and the cylinder shaft 333 to provide tension such that the cylinder shaft 333 is in close contact with the adjustment frame 310. The spring 334 may be accommodated in the tension cylinder 332. For example, the spring 334 may be composed of a coil spring 334, and one side of the cylinder shaft 333 may be fitted into the spring 334.

The tension adjusting module may include a tension cylinder 332 and a pressure adjusting member 335.

The tension cylinder 332 may accommodate the cylinder shaft 333, and may form a pressurization space T to which pressure is supplied together with the cylinder shaft 333.

The tension cylinder 332 may be disposed between the adjustment frame 310 and the nut 331a of the fixing bolt 331, through which the fixing bolt 331 is installed, and in which an accommodation space is formed. The cylinder shaft 333 may be slidably coupled to the tension cylinder 332.

A portion of the cylinder shaft 333 may be accommodated in the tension cylinder 332, and a remaining portion of the cylinder shaft 333 may be disposed to protrude from the tension cylinder 332 and contact the adjustment frame 310.

The pressure adjusting member 335 may inject or discharge pressure into the pressurization space T between the cylinder shaft 333 and the tension cylinder 332, to adjust tension of the spring 334.

The pressure adjusting member 335 may inject or discharge pressure into the pressurization space T to move the tension cylinder 332 relative to the cylinder shaft 333, to adjust tension of the spring 334.

When pressure is injected into the pressurization space T by the pressure adjusting member 335, the spring 334 may be compressed while increasing the pressurization space T. When the spring 334 is compressed, a distance between the adjustment frame 310 and the tension cylinder 332 may decrease, and the servo motor 353 may easily insert the wedge member 351 between the housing 130 and the adjustment frame 310.

Specifically, when the spring 334 is compressed, compressive force applied to the wedge member 351 by tensile force applied to the fixing bolt 331 may be reduced. Therefore, the servo motor 353 may easily insert the wedge member 351 between the housing 130 and the adjustment frame 310.

For example, the pressure adjusting member 335 may provide hydraulic pressure to the pressurization space T by driving of a hydraulic motor 335a.

First, when the hydraulic motor 335a injects hydraulic oil into the pressurization space T via a hydraulic supply line 335b, the pressurization space T may increase. In this case, the spring 334 may be compressed while moving the tension cylinder 332 relative to the cylinder shaft 333, and the distance between the tension cylinder 332 and the adjustment frame 310 may decrease.

On the other hand, when the hydraulic motor 335a discharges hydraulic oil from the pressurization space T via the hydraulic supply line 335b, the pressurization space T may decrease. In this case, the spring 334 may be relaxed while moving the tension cylinder 332 relative to the cylinder shaft 333, and the distance between the tension cylinder 332 and the adjustment frame 310 may increase.

The fixing member 330 may include a fixing bolt 331, a cylinder shaft 333, a tension cylinder 332, a spring 334, and a pressure adjusting member 335.

The fixing bolt 331 may be installed through the adjustment frame 310, and one side thereof may be fixed to the housing 130.

The cylinder shaft 333 may be installed through the fixing bolt 331, and one side thereof may be disposed to contact the adjustment frame 310.

The tension cylinder 332 may accommodate the cylinder shaft 333, and may form the pressurization space T to which pressure is supplied together with the cylinder shaft 333.

The spring 334 may be installed between the tension cylinder 332 and the cylinder shaft 333 to provide tension such that the cylinder shaft 333 is in close contact with the adjustment frame 310.

The pressure adjusting member 335 may inject or discharge hydraulic pressure or pneumatic pressure into the pressurization space T between the cylinder shaft 333 and the tension cylinder 332 to adjust tension of the spring 334, while moving the tension cylinder 332 relative to the cylinder shaft 333.

Hereinafter, with reference to FIGS. 6 to 8, details of a configuration in a process of adjusting an alignment state of a restraint roll unit 100 will be described as follows.

Referring to FIG. 6, the fixing member 330 and the rotating member 350 may be installed in connection with each other.

The fixing bolt 331 of the fixing member 330 may be fixed to the housing 130 through the tension cylinder 332, the cylinder shaft 333, the adjustment frame 310, and the wedge member 351.

Referring to FIGS. 7 and 8, when tension of the spring 334 is adjusted by the pressure adjusting member 335, a distance between the adjustment frame 310 and the tension cylinder 332 may be adjusted, and a distance between the housing 130 and the adjustment frame 310 may be adjusted. Specifically, a distance between the housing 130 and the adjustment frame 310 may be adjusted by the wedge member 351.

The wedge member 351 may be disposed between the housing 130 and the adjustment frame 310. The distance between the housing 130 and the adjustment frame 310 may be changed depending on a thickness of the wedge member 351 disposed between the housing 130 and the adjustment frame 310. Therefore, the wedge member 351 may be inserted between the housing 130 and the adjustment frame 310 to adjust a position of the housing 130 while pushing the housing 130.

In this case, the adjustment frame 310 may be fixed, and an alignment state of the restraint roll unit 100 may be adjusted while moving the housing 130 based on the fixed adjustment frame 310.

Referring to FIG. 7, when pressure is discharged from the pressurization space T by the pressure adjusting member 335, the spring 334 may be relaxed while decreasing the pressurization space T.

When the spring 334 is relaxed, a distance between the adjustment frame 310 and the tension cylinder 332 may increase. In this case, the servo motor 353 may dispose a thin portion of the wedge member 351 between the housing 130 and the adjustment frame 310 while moving the wedge member 351 to the left.

Referring to FIG. 8, when pressure is injected into the pressurization space T by the pressure adjusting member 335, the spring 334 may be compressed while increasing the pressurization space T.

When the spring 334 is compressed, a distance between the adjustment frame 310 and the tension cylinder 332 may decrease. In this case, the servo motor 353 may dispose a thick portion of the wedge member 351 between the housing 130 and the adjustment frame 310 while moving the wedge member 351 to the right.

Next, referring to FIGS. 9 and 10, components included in an apparatus for shearing a steel plate according to an embodiment of the present disclosure will be specifically described.

FIG. 9 is a plan view of an apparatus for shearing a steel plate according to an embodiment of the present disclosure. FIG. 10 is a view illustrating a misaligned state of a restraint roll unit 100 included in the apparatus of FIG. 9.

An apparatus for shearing a steel plate according to an embodiment of the present disclosure may include a roll table, a cutting unit 20, and the restraint roll apparatus 30 described above.

The roll table may transport a steel plate S, and a plurality of transport roll units 10 may be disposed at a predetermined interval in a transport direction (X) of the steel plate S.

The transport roll unit 10 may include a transport roll and a transport motor. The transport roll may transport the steel plate S while rotating the transport roll. The transport motor may provide driving force to rotate the transport roll.

The cutting unit 20 may continuously cut a width direction (Y) end region of the steel plate S transported on the roll table.

The cutting unit 20 may have an upper blade disposed on an upper side and a lower blade disposed on a lower side.

When performing a process of sequentially cutting a side surface of the steel plate S by using rotational-translational movement of the upper blade, among blades provided on both sides, the steel plate S may be kept in a stationary state by the restraint roll apparatus 30.

After a cutting stroke of the upper blade is completed, the restraint roll 110 of the restraint roll apparatus 30 may rotate while maintaining pressure of pressurizing the steel plate S, and may move the steel plate S in a forward direction using frictional force between the restraint roll 110 of the restraint roll apparatus 30, but may stop the steel plate S in a position in which a cutting line on a side surface of the steel plate S is continuous, and the upper blade may perform rotational-translational movement again in this position. A series of feeding-stopping-cutting processes may be repeated several times, both sides of the steel plate S may be cut to have a target width.

The restraint roll apparatus 30 may be disposed around the cutting unit 20 in the transport direction (X) of the steel plate S, and may transport the steel plate S while pressurizing the steel plate S.

Referring to FIG. 1, the restraint roll apparatus 30 may transport and stop the steel plate S using rotational force while restraining the upper and lower surfaces of the steel plate S with force.

The restraint roll apparatus 30 may include a first restraint roll apparatus 30a and a second restraint roll apparatus 30b.

The first restraint roll apparatus 30a may be disposed on an upstream side of the steel plate S being transported. The second restraint roll apparatus 30 may be disposed on a downstream side of the steel plate S being transported, and may be installed spaced apart from each other, with the cutting unit 20 therebetween, in the transport direction (X) of the steel plate S.

Referring to FIG. 9, the steel plate S may be transported and stopped using rotational force in a state in which the first and second restraint roll apparatuses (30) are restrained on upper and lower surfaces of the steel plate S by force.

Referring to FIG. 10, in an apparatus for shearing a steel plate, an alignment state of the restraint roll unit 100 may be changed due to unexpected external force, impact, or the like, and the restraint roll 110 of the restraint roll apparatus 30 may be misaligned. When the restraint roll 110 of the restraint roll apparatus 30 is misaligned, straightness of the steel plate S may not be secured, and a cutting line on a side surface of the steel plate S may deviate from a straight line, which may lead to a defective cutting surface of the steel plate S.

In this case, it is necessary to adjust the alignment of the restraint roll unit 100 such that the restraint roll apparatus 30 in a misaligned state, as illustrated in FIG. 10, may be aligned to a correct position, as illustrated in FIG. 9.

Hereinafter, a process of adjusting an alignment state of a restraint roll unit 100 may be briefly described as follows.

When misalignment or the like occurs in a restraint roll 110 of a restraint roll apparatus 30 and an alignment state of a restraint roll unit 100 needs to be adjusted (see FIG. 10), the alignment state of the restraint roll unit 100 may be adjusted in a correct position through the following process, as illustrated in FIG. 9. (See FIG. 9)

First, tension of the spring 334 applied to the fixing member 330 of the restraint roll apparatus 30 may be released.

Next, as described above, the rotating member 350 may move the wedge member 351 between the housing 130 and the adjustment frame 310 in a forward direction or a backward direction, to rotate the housing 130 based on the rotation center unit 400. In this case, considering misalignment or the like of the restraint roll 110, the servo motor 353 may determine a degree of moving the wedge member 351 in a forward direction or a backward direction.

In this case, information on a degree of warping of the restraint roll apparatus 30 may be collected by an image recognition unit (not illustrated) or the like, and a controlling unit (not illustrated) may align the restraint roll apparatus 30 to a correct position (see FIG. 9) such that straightness of the steel plate S is secured based on the information collected by the image recognition unit, etc.

Next, alignment of the restraint roll apparatus 30 may be completed by applying tension of the spring 334 to the fixing member 330 to fix the housing 130.

In addition, an apparatus for shearing a steel plate of the present disclosure may be applied with various embodiments of the restraint roll apparatus 30 having various examples described above.

Therefore, configurations of a restraint roll unit 100, a pressurizing unit 200, an adjustment unit 300, and the like of a restraint roll apparatus 30 utilized in an apparatus for shearing a steel plate may be the same as the configuration of the restraint roll apparatus 30 as described above, and thus, a detailed description thereof will be omitted to avoid duplication.

Although embodiments of the present disclosure have been described in detail above, the scope of the rights of the present disclosure is not limited thereto, and it will be obvious to those skilled in the art that various modifications and variations are possible within a scope that does not depart from the technical idea of the present disclosure described in the claims.

### [Description of Reference Characters]

10: Transport Roll Unit 20: Cutting Unit
30: Restraint Roll Apparatus 30a: First Restraint Roll Apparatus
30b: Second Restraint Roll Apparatus 100: Restraint Roll Unit
100a: First Restraint Roll Unit 100b: Second Restraint Roll Unit
110: Restraint Roll 130: Housing
150: Driving Member 200: Pressurizing Unit
210: Pressurizing Cylinder 230: Cylinder Bracket
230a: First Cylinder Bracket 230b: Second Cylinder Bracket
300: Adjustment unit 310: Adjustment frame
330: Fixing Member 330a: First Fixing Member
330b: Second Fixing Member 331: Fixing Bolt
331a: Nut 332: Tension Cylinder
333: Cylinder Shaft 334: Spring
335: Pressure Adjusting Member 335a: Hydraulic Motor
335b: Hydraulic Supply Line 350: Rotating Member
351: Wedge Member 352: Wedge Hole
353: Servo Motor 400: Rotation Center Unit
L: Horizontal Line S: Steel Plate
T: Pressurization Space X: Transport Direction (Front-Backward Direction)
Y: Width Direction (Left-Right Direction) Z: Up-Down Direction

## Claims

1. A restraint roll apparatus comprising:
a pair of restraint roll units pressurizing and restraining upper and lower sides of a steel plate and transporting the steel plate in a restrained state while rotating the pair of restraint roll units;
a pressurizing unit installed to connect between the pair of restraint roll units and applying a pressurizing force to pressurize the steel plate with the pair of restraint roll units; and
an adjustment unit rotating a restraint roll unit, based on a rotation center unit, to adjust an alignment state of the restraint roll unit.

2. The restraint roll apparatus of claim 1, wherein the restraint roll unit includes:
a restraint roll pressurizing and transporting the steel plate while rotating the restraint roll; a driving member connected to the restraint roll via a drive shaft and rotating the restraint roll; and
a housing connected to the rotation center unit and rotating based on the rotation center unit by the adjustment unit.

3. The restraint roll apparatus of claim 2, wherein the adjustment unit includes:
an adjustment frame installed around the housing;
a fixing member installed on the adjustment frame, and fixing the housing while closely contacting the adjustment frame via tension of a spring, in a state in which one side is fixed to the housing; and
a rotating member moving a wedge member between the housing and the adjustment frame in a forward direction or a backward direction, to rotate the housing based on the rotation center unit.

4. The restraint roll apparatus of claim 3, wherein the fixing member includes:
a first fixing member installed on the adjustment frame, and fixing the housing by pressurizing in a first direction; and
a second fixing member installed on the adjustment frame, and fixing the housing by pressurizing in a second direction, intersecting the first direction.

5. The restraint roll apparatus of claim 3, wherein the fixing member includes:
a fixing bolt installed through the adjustment frame and of which one side is fixed to the housing;
a pressurizing module installed on the other side of the fixing bolt, and applying tensile force to the fixing bolt while closely contacting the adjustment frame via tension of the spring; and
a tension adjusting module having a tension cylinder accommodating the pressurizing module, and adjusting tension of the spring via pressure provided between the pressurizing module and the tension cylinder.

6. The restraint roll apparatus of claim 5, wherein the pressurizing module includes:
a cylinder shaft through which the fixing bolt is installed and of which one side is disposed to contact the adjustment frame; and
the spring installed between the tension cylinder and the cylinder shaft to provide tension, to closely contact the cylinder shaft and the adjustment frame.

7. The restraint roll apparatus of claim 6, wherein the tension adjusting module includes:
the tension cylinder accommodating the cylinder shaft and forming a pressurization space to which pressure is supplied, together with the cylinder shaft; and
a pressure adjusting member injecting or discharging pressure into the pressurization space between the cylinder shaft and the tension cylinder to adjust tension of the spring.

8. The restraint roll apparatus of claim 3, wherein the fixing member includes:
a fixing bolt installed through the adjustment frame and having one side of which is fixed to the housing;
a cylinder shaft through which the fixing bolt is installed and of which one side is disposed to contact the adjustment frame;
a tension cylinder accommodating the cylinder shaft and forming a pressurization space to which pressure is supplied, together with the cylinder shaft;
the spring disposed on an opposite side of the adjustment frame with the cylinder shaft interposed therebetween, and installed between the tension cylinder and the cylinder shaft to provide tension, to closely contact the adjustment frame; and
a pressure adjusting member injecting or discharging hydraulic pressure or pneumatic pressure into the pressurization space between the cylinder shaft and the tension cylinder to adjust tension of the spring, while moving the tension cylinder relative to the cylinder shaft.

9. The restraint roll apparatus of claim 3, wherein the rotating member includes:
a wedge member installed to move between the housing and the adjustment frame in a forward direction or a backward direction, and of which thickness is changed in the direction of moving forward and backward; and
a servo motor moving the wedge member in a forward direction or a backward direction to adjust a distance between the housing and the adjustment frame.

10. The restraint roll apparatus of claim 9, wherein a fixing bolt of the fixing member is installed to penetrate an wedge hole of the wedge member, and
a first diameter of the wedge hole is configured to be larger than a second diameter of the fixing bolt, to move the wedge member in a direction, intersecting a length direction of the fixing bolt, in a state in which the fixing bolt penetrates the wedge member.

11. An apparatus for shearing a steel plate, comprising:
a roll table transporting the steel plate;
a cutting unit for continuously cutting a width direction end region of the steel plate transported on the roll table; and
the restraint roll apparatus according to any one of claims 1 to 10, disposed around the cutting unit in a transport direction of the steel plate, and transporting the steel plate in a pressurized state.

12. The apparatus of claim 11, wherein the restraint roll apparatus includes:
a first restraint roll apparatus disposed on an upstream side of the steel plate being transported; and
a second restraint roll apparatus disposed on a downstream side of the steel plate being transported, and installed with the cutting unit interposed therebetween in the transport direction of the steel plate.
